# EUROPÄISCHE PATENTSCHRIFT

(11) **EP 1 320 730 B1**
(45) Veröffentlichungstag und Bekanntmachung des Hinweises auf die Patenterteilung: **27.09.2006**
(21) Anmeldenummer: 01954271.1
(22) Anmeldetag: 13.08.2001
(51) Int. Cl.: G01G 23/00, G01G 23/01

(54) **MESSAPPARATUR MIT BENUTZERPROFIL**
MEASURING APPARATUS WITH A USER PROFILE
APPAREIL DE MESURE A PROFIL UTILISATEUR

(30) Priorität: 14.08.2000 DE 10039668
(43) Veröffentlichungstag der Anmeldung: 25.06.2003
(73) Patentinhaber: Mettler-Toledo AG, 8606 Greifensee (CH)
(72) Erfinder: NÜESCH, Reto, CH-8606 Greifensee (CH); GIETENBRUCH, Matthias, CH-8107 Buchs (CH)
(86) Internationale Anmeldenummer: PCT/IB2001/001438
(87) Internationale Veröffentlichungsnummer: WO 2002/014809

(56) Entgegenhaltungen:
- EP-A- 0 991 027
- US-A- 4 676 327
- US-A- 5 600 781
- US-A- 6 081 750

## Beschreibung

Die Erfindung betrifft eine Messapparatur, insbesondere ein Labormessgerät wie etwa eine Analysewaage, die Mittel zum Einstellen von Parameterwerten für die Durchführung spezifischer Messaufgaben oder/und für die Abwicklung der Kommunikation mit einer Bedienperson aufweist und derartige Sätze von Parameterwerten als Profil gespeichert hat.

Messapparaturen der geschilderten Art sind in verschiedensten Ausführungsformen bekannt. Je nach Art der Messung, Komplexität und Genauigkeit der Apparatur und angebotenem Bedienkomfort unterscheiden sie sich hauptsächlich in der Zahl der einstellbaren und vor allem speicherbaren Parameterwerte. Die Speicherung von Sätzen von Parameterwerten als Benutzer-Profil ist zum Beispiel in der PC-Welt weit verbreitet, siehe z.B. US-A-5 600 781. Bei Messapparaturen sind die Einstellungen aber weit mehr von Bedeutung - eine unzutreffende Einstellung kann das Messergebnis verfälschen oder gar ein Gerät zerstören. Zum Beispiel arbeiten in einem Laboratorium häufig mehrere Bedienpersonen an unterschiedlichen Aufgaben, die aber alle auf die Benützung einer Laborwaage angewiesen sind. Normalerweise lässt sich eine Waage durch Einstellen gewisser Parameter, also der Eingabe eines Profils, auf die jeweiligen Bedürfnisse einer Bedienperson ausrichten; Beispiele für derartige Einstellungen sind etwa die Einpendelzeit und die Vibrationsfilterung - was die Genauigkeit der Messung beeinflusst - die Masseinheit, oder auch die auf einer alpha-numerischen Anzeigeeinrichtung erscheinenden Sprache. Eine Ausführung einer Waage dieser Art ist etwa der US-A-4,676,327 zu entnehmen, die ein gesondertes Bedienungsfeld für die Eingabe spezifischer Einstellungen vor der eigentlichen Wägung vorsieht (Spalte 2, Zeilen 53-64).

Das Einstellen nur schon der wichtigsten Parameter ist aber sehr zeitaufwendig. Deshalb ist es den Bedienpersonen lieber, eine Waage mit eigenem, bereits eingestelltem Profil benützen zu können. Auf diese Weise lassen sich zudem Einstellungsirrtümer eher vermeiden. Hohe Investitionskosten und grosser Platzbedarf verbieten es in der Regel, jeder Bedienperson oder für jede häufige Anwendung in einem Laboratorium eine eigene Waage zur Verfügung zu stellen. Das Abspeichern verschiedener voreingestellter Sätze von Parametern für verschiedene Personen oder Messaufgaben an ein und derselben Waage hingegen ist mit heutige üblicher Elektronik in Messapparaturen ohne grossen Mehraufwand möglich.

Das Aktivieren abgespeicherter Profile durch die Bedienperson bedingt manuelle Eingaben, in der Regel die Betätigung mehrerer Drucktasten in Folge, was ebenfalls zeitraubend und fehleranfällig ist. Alternativ kann eine Vielzahl von Tasten vorhanden sein, wobei ein Profil durch Betätigen einer einzigen Taste aktiviert wird. Das ist zwar schneller, bedingt aber eine grosse Eingabevorrichtung, und gleichwohl ist die mögliche Zahl von Profilen durch die Tastenzahl begrenzt und die Gefahr des Drückens einer falschen Taste ist ebenfalls vorhanden.

Es besteht daher die Aufgabe, eine Messapparatur mit gespeicherten Benutzerprofilen dahingehend zu verbessern, dass sich für jede Bedienperson beziehungsweise der von dieser durchzuführenden spezifischen Messaufgabe rasch und mit hoher Zuverlässigkeit der für sie richtige Satz von Parameterwerten einstellen lässt.

Die Aufgabe wird durch eine der Messapparatur zugeordnete Vorrichtung gelöst, welche die Bedienperson erkennen und einen für diese abgespeicherten Satz von Parameterwerten aktivieren kann. Dabei kann der Satz von Parameterwerten sowohl die von der Bedienperson bevorzugten als auch die für eine spezifische, in der Regel der Bedienperson zugeordnete Messaufgabe nötigen Einstellungen umfassen.

Die vorgesehene Lösung benützt den Umstand, dass die Zahl der Personen und Anwendungen, für die ein Profil abgelegt wird, zwar unbestimmt, aber endlich und nicht gross ist. Dadurch sind die Anforderungen an eine Erkennungsvorrichtung eher bescheiden. Eine Erkennungsvorrichtung kann etwa wie folgt arbeiten. Vorhandene, von der Bedienperson beeinflusste Signale werden nach bestimmten Kriterien ausgewertet, wobei auch Unschärfen berücksichtigt werden können. Als Resultat ergibt sich ein möglicherweise unvollständiger Satz von Werten für die einzelnen Kriterien. Die spezifische Kombination der Werte charakterisiert das Signal und erlaubt eine Diskriminierung, also das Auseinanderhalten durch klassieren unterschiedlicher Signale. Für jede registrierte Bedienperson ist eine einmalige, spezifische Wertekombination hinterlegt. Die Erkennungsvorrichtung vergleicht die Kombination der gewichteten Kriterien des ausgewerteten Signals mit den hinterlegten Wertekombinationen und ermittelt so bei Übereinstimmung, von welcher Person die Signale höchstwahrscheinlich stammen.

Die Auswertung der Signale wird besonders einfach, wenn es sich dabei um bestimmte Sendesignale mit ausgezeichneten Eigenschaften handelt, auf die ein Empfänger speziell anspricht. So kann etwa die Bedienperson einen Sender mitführen, dessen Signale von der Messapparatur, genauer dem zum Mittel zur Verarbeitung und Gewichtung der personenbeeinflussten Signale gehörenden Empfänger der Erkennungseinrichtung, zweifelsfrei identifiziert werden können. Die Messapparatur kann in der Folge mit hoher Zuverlässigkeit die Aktivierung des richtigen Satzes von Parameterwerten veranlassen. Derartige Sender können mit kleinen Dimensionen gebaut und nach Bedarf gestaltet sein. Sie können beispielsweise in eine im Labor ohnehin zu tragende Badge oder in einen ständig getragenen, persönlichen Gegenstand wie eine Armbanduhr oder einen Fingerring integriert sein.

Die Auswertekriterien berücksichtigen natürlich in erster Linie Eigenschaften, welche die Signale verschiedener Bedienpersonen voneinander unterscheiden. Derartige Signale können auch direkt von der Bedienperson stammen und von ihr unwillkürlich ausgestrahlt werden. Beispiele dafür sind die Wärmestrahlung mit Ihrer Verteilung, die Silhouette oder die Stimme. Mit letzteren ist auch leicht eine Fernerkennung möglich. Die Auswertung ist zwar aufwändiger als beim Empfangen eines aktiven Sendersignals. Der Vorteil aber ist, dass die Person selbst erfasst wird, nicht nur ein ihr zugeordneter Gegenstand.

Eine bevorzugte Ausführungsform sieht vor, die Messapparatur mit einem Sender zu versehen, wobei ein einziger Sender mehreren Messapparaturen dienen kann. Der Empfänger nimmt die personenabhängigen Veränderungen des gesendeten Signals wahr. Besonders ausgeprägt und mit hoher Zuverlässigkeit ist dies möglich, wenn die Bedienperson einen Transponder trägt, eine Einrichtung, welche das Sendesignal spezifisch verändert und mit vergleichsweise hoher Leistung zurückgibt. Die Diskriminierung wird damit besonders einfach, die Validierung äusserst zuverlässig. Transponder können passive elektrische Schaltungen sein, so dass keine Speisung vorgesehen werden muss. Was die physische Ausgestaltung angeht, so gelten sinngemäss die gleichen Ausführungen wie sie für die individuellen, von der Bedienperson getragenen Sender gemacht wurden.

Die Validierung eines (persönlichen) Gegenstands, welchen die Bedienperson mitführt, ist eine besonders geeignete Variante, wenn weniger die Person selbst als die spezifische Messaufgabe im Vordergrund steht und der mitgeführte Gegenstand den anwendungsbezogenen Satz von Parameterwerten in der Messapparatur aktiviert. So ist es zum Beispiel möglich, in einem Laboratorium eine Mehrzahl von Transpondern bereit zu haben, die je für die Aktivierung eines bestimmten Parametersatzes codiert sind, der seinerseits für eine bestimmte Messaufgabe optimiert ist. Zur Durchführung einer bestimmten Messaufgabe greift sich die Bedienperson den entsprechenden Transponder und nähert sich einer beliebig gewählten von mehreren im Labor vorhandenen Messapparaturen, die nach der Validierung selbsttätig die adäquaten Einstellungen vornimmt. Die Codierung des Transponders kann dabei auch individuelle Gegebenheiten der Bedienperson berücksichtigen.

Ist besonderer Wert darauf zu legen, dass die tatsächliche Bedienperson mit jener übereinstimmt, die durch die Validierung ermittelt wurde und für die ein Profil einzustellen ist, so lässt sich dies durch ein zusätzliches Mittel zum Bestätigen der erkannten Person verifizieren. Ein gängiges Mittel dafür ist eine Passworteingabe, die allerdings nur verifiziert, dass die Bedienperson über die Information verfügt, welche den Zugang zu weiteren Aktionen für die validierte Person erschliesst. Soll die Bedienperson unmittelbar identifiziert werden, so drängt sich die Lesung einer biometrischen Grösse auf, beispielsweise die Auswertung eines Fingerabdrucks. Die Messapparatur kann vorsehen, im Normalfall, wenn die Diskriminierung des erfassten Signals ohne Schwierigkeiten erfolgt, nur auf die Validierung abzustellen, im Ausnahmefall jedoch, wenn sich die Diskriminierung und Validierung, also die Erkennung auf der ersten Stufe, als schwierig erweisen sollte, oder wenn besondere Funktionen eine höhere Sicherheit bedingen, eine Verifizierung zu verlangen. Wiederum ist der relativ kleinen Zahlen wegen, die berücksichtigt werden müssen, die Anforderung auch an die biometrische Identifikation nicht sehr hoch. Es kann durchaus genügen, wenn sowohl die Validierung als auch die Verifizierung, die auf Grund anderer Kriterien erfolgt eine mässige Zuverlässigkeit aufweisen, weil gleichwohl die Wahrscheinlichkeit, dass beide Systeme auf dieselbe Person erkennen, die es in der Tat nicht ist, sehr gering ist.

In vielen Fällen dürfte eine gelegentliche Fehlvalidierung unbedenklich sein, sofern die Bedienperson dies zu Kenntnis nehmen und Massnahmen zur Korrektur einleiten kann. Auch muss die Möglichkeit gegeben sein, einen vorgeschlagenen oder bereits aktivierten Satz von Parameterwerten verändern zu können, weil für die gerade auszuführende Messung andere Werte benötigt werden. Bevorzugt ist daher vorgesehen, das Profil in Teilprofile zu zerlegen, die im Dialog mit der Bedienperson sukzessive aktiviert werden. So kann die Messapparatur nach der Validierung eine Begrüssungsbotschaft an die Bedienperson richten, aus welcher die Validierung ersichtlich ist, das zur Aktivierung vorgesehene restliche Profil ankündigen - das beispielsweise vom verwendeten Transponder abhängen kann - und eine Bestätigung erbitten. Erst wenn die Bedienperson quittiert hat, geht die Aktivierung weiter. Alternativ kann die Bestätigung unterbleiben und die Messapparatur geht in einen Modus über, welcher übliche Eingaben erlaubt, unter anderem auch die Änderung von Parameterwerten. Weiter kann die Messapparatur so gestaltet sein, dass sie eine Aktivierung des Satzes von Parameterwerten auf Grund von mehr als einer Signalerkennung vornimmt, zum Beispiel indem sie für die Validierung der Bedienperson biometrische Daten auswertet und aufgabenabhängige Einstellungen auf Grund eines Transpondersignals vornimmt, das personenunabhängig sein kann.

Die eben umschriebene Erfindung soll durch eine konkretere Schilderung eines Beispiels einer Anwendung illustriert werden, ohne sie jedoch darauf einzuschränken.

Typischer Vertreter einer Messapparatur in einem Labor ist die Analysenwaage, meist in kompakter Form mit einem Bedienungspult an der Vorderseite, das einen als Touch-Screen ausgebildeten Bildschirm und einige Drucktasten aufweist. Als weitere Elemente der Ein-/Ausgabevorrichtung seien Näherungssensoren, Mikrophone und ein Lautsprecher vorhanden. Ferner enthalte diese Wage eine Sende-/Empfangseinrichtung, die auf passive, in Badges eingebaute Transponder abgestimmt ist. Benutzer dieser Waage sind verschiedene Bedienpersonen, deren Zahl sich in der Grössenordnung eines Dutzends bewegt. Diese tragen am Körper eine Badge, welche sie für das Öffnen von Türen im Laborgebäude und dgl. benötigen - in dieser ist der passive Transponder eingeschweisst. Der Transponder wird beim erstellen der Badge getrimmt. Jeder Transponder erhält seine individuelle Trimmung, die im ganzen System mit den Badges nur einmal vorkommt. Er gibt auf das Sendesignal der Laboratoriumswaage hin ein in charakteristischer Weise verändertes Signal ab, das vom Empfänger der Waage leicht diskriminiert werden kann. Eine weitere Messapparatur als die beschriebene Waage kann eine nämliche Sende-/Empfangseinrichtung mit einem anderen Sendesignal aufweisen, auf das aber der Transponder in gleicher Weise reagiert, so dass verschiedene Messapparaturen denselben Transponder ansprechen und erkennen können.

Die Waage besitzt verschiedene Einstellmöglichkeiten für bestimmte Aufgaben, wovon zur Illustration einige erläutert werden. Beim Auflegen einer Last auf die Waagschale neigt diese zu Pendelschwingungen. Will man die Anzeige des Gewichtes im Anzeigefeld rasch erreichen und dabei in Kauf nehmen, dass noch eine gewisse Schwingneigung vorhanden und die Messung daher weniger genau ist, so wird man eine geringere Dämpfung wünschen als im gegenteiligen Fall. Es ist daher möglich, die Dämpfung einzustellen. Die Anzeige der Waage erlaubt eine Umschaltung der Einheiten, die angezeigt werden (Gramm, Unzen, Karat usw.). Für gewisse Anwendungen wird eine berechnete Grösse angezeigt, z. B. die Stückzahl oder das Volumen. Der Modus und die Anzeigeeinheit sind ebenfalls einstellbare Parameter. Andere Voreinstellungen der Waage könnten etwa die Art der Durchführung der Wägung betreffen, wie eine Dosierwägung, bei der einzelne Komponenten einer Mischung zugegeben werden, wobei nach jeder Wägung einer zugegebenen Komponente automatisch auf Null zurückgestellt wird. Eine andere häufig angewandte Art der Wägung ist die sogenannte Rückwägung, bei der etwa eine feuchte Substanz erst gewogen, das Wiegeergebnis gespeichert, die Substanz in ihrem Behälter getrocknet und dann neuerlich gewogen wird. Eine weitere häufige Art der Wägung für an sich gleichartige Teile ist eine Mehrfachwägung bei der dann auf das Einzelgewicht rückgerechnet wird (Division durch die Stückzahl). Weitere, meist vom Benützer und/oder der Art seiner Tätigkeit abhängige Funktionen können motorische oder manuelle Betätigung einer Türe eines Windschutzes, die Funktion eines Betätigungssensors (Windschutztüre auf/zu, Tarieren) oder der Betrieb eines allenfalls angeschlossenen Druckers sein. All diese und andere Funktionen sind abhängig von den Wünschen und/oder der Tätigkeit eines Benutzers, der häufig ein vorbestimmtes Profil solcher Parameter für seine Zwecke einstellen muss. Es ist nun leicht einzusehen, dass es, wenn mehrere Personen abwechselnd die Waage für verschiedene Aufgaben benützen, sehr mühsam wäre, nach jedem Wechsel überprüfen zu müssen, welche Einstellungen übernommen und welche wieder neu gesetzt werden müssen.

Deshalb weist die Waage einen Menupunkt auf, mit welchem eine einmal vorgenommene Einstellung aller Parameter als Profil abgespeichert werden kann. Dies kann mehrfach geschehen, wobei jedem Profil eine Kennung zugeordnet ist. Die erfinderische Waage kann darüber hinaus die Benützer verwalten, das heisst, sie speichert eine Liste von angemeldeten Benützern und ordnet das definierte Profil dem Benützer zu. Ein Benützer kann eine Mehrzahl von Profilen sein eigen nennen.

Damit die Waage einen Benützer validieren kann, muss sie dessen "Persönlichkeitsmerkmale" speichern, im vorliegenden Fall also die Antwort eines bestimmten Transponders auf ihr Sendesignal abgelegt haben. Für diese einmalige Aufnahme ist ein spezieller Menupunkt vorgesehen, der nur Personen mit spezieller Zugangsberechtigung offen steht.

Eine Benützung der Analysenwaage im Labor könnte nun wie folgt ablaufen. Die Waage sei in Bereitschaft, eine Bedienperson arbeitet daran. Eine Kollegin tritt hinzu und wartet, bis die Waage frei wird. Beide tragen ihre Badge. Die Waage reagiert noch nicht auf die zweite Person. Erst nachdem der Wägevorgang abgeschlossen und die Waage freigegeben ist, begrüsst diese die zweite Person mit ihrem Namen, über den Lautsprecher oder/und auf dem Anzeigeschirm. Dies geschieht auf Grund der Validierung durch das Transpondersignal. Sollte wider Erwarten der Name nicht stimmen, würde die Bedienperson mit "nicht zutreffend" oder ähnlich quittieren und die Waage würde in einen Einstellmodus wechseln, wie er allen nicht gespeicherten Benützern zur Verfügung steht. Zutreffendenfalls quittiert die Bedienperson über Mikrofoneingabe oder Tastendruck oder durch Abwarten einer Zeitspanne, nach der automatisch zum nächsten Schritt übergegangen wird. Die Waage zeigt dann an, welche Profile für die Bedienperson zur Verfügung stehen und welches zuletzt benützt wurde. Die Bedienperson hat die Möglichkeit zu wählen oder wiederum eine gewisse Zeit abzuwarten, worauf das von dieser Person zuletzt benützte Profil eingestellt wird.

Der Dialog gibt aber auch die Möglichkeit, keines der Profile zu wählen, worauf ein Standard-Profil eingestellt und in den Einstellmodus gewechselt wird. Ein daraufhin neu eingestelltes Profil kann vor oder nach dem Wägevorgang als weiteres Profil gespeichert werden.

Nehmen wir weiter an, die zweite Bedienperson, wolle nicht wägen, sondern eine dritte Person als Benützerin in die Waage eingeben. Dazu sei sie zwar berechtigt, doch sei dies nur zulässig, wenn sie als Bedienperson verifiziert ist. Sie muss dann zunächst ein beigestelltes Fingerabdrucklesesystem benützen, welches die Freigabe auslöst.

Obwohl die Erfindung am Beispiel eines Labors illustriert wurde, wo die Bedienperson sich in unmittelbarer Nähe der Messapparatur aufhält, ist sie nicht darauf beschränkt. Messapparaturen, auch Waagen, können von Ferne bedient werden, zum Beispiel über Internet. Eine Validierung kann auch in solchen Fällen automatisch erfolgen, zum Beispiel über die Sprache, wenn gleichzeitig ein Sprachverbindung besteht, oder über die personentypische Art, wie eine Marke über das Eingabemedium, in der Regel den Bildschirm, geführt wird.

## Patentansprüche

1. Messapparatur, insbesondere Labormessgerät wie etwa Analysewaage, mit Mitteln zum Einstellen von Parameterwerten für die Durchführung spezifischer Messaufgaben oder/und für die Abwicklung der Kommunikation mit einer Bedienperson und zum Abspeichern von Sätzen solcher Parameterwerte als Profil, **dadurch gekennzeichnet, dass** die Messapparatur mit einer Erkennungseinrichtung versehen ist, welche eine Bedienperson zu erkennen und ein dieser zugeordnetes, abgespeichertes Profil zu aktivieren vermag.

2. Messapparatur nach Anspruch 1, **dadurch gekennzeichnet, dass** die Erkennungseinrichtung Mittel zur Verarbeitung und Gewichtung personenbeeinflusster Signale nach vorgegebenen Kriterien und Mittel zur Zuordnung von Kombinationen gewichteter Kriterien zu bestimmten Person enthält.

3. Messapparatur nach Anspruch 2, **dadurch gekennzeichnet, dass** das Mittel zur Verarbeitung und Gewichtung personenbeeinflusster Signale einen Empfänger enthält, welcher auf spezifische Sendesignale anspricht.

4. Messapparatur nach Anspruch 3, **dadurch gekennzeichnet, dass** die Sendesignale von einem von der Bedienperson mitgeführten, sie identifizierenden Sender stammen.

5. Messapparatur nach Anspruch 3, **dadurch gekennzeichnet, dass** die spezifischen Sendesignale unwillkürlich von der Bedienperson ausgestrahlte biometrische Signale sind.

6. Messapparatur nach Anspruch 3, **dadurch gekennzeichnet, dass** sie überdies einen Sender enthält und der Empfänger auf spezifische, personenabhängige Veränderungen des gesendeten Signals anspricht.

7. Messapparatur nach Anspruch 6, **dadurch gekennzeichnet, dass** die Bedienperson einen sie identifizierenden Transponder trägt.

8. Messapparatur nach Anspruch 4 oder 7, **dadurch gekennzeichnet, dass** der identifizierende Sender oder Transponder ungeachtet der Bedienperson ein vom Sender oder Transponder abhängendes anwendungsspezifisches Profil aktiviert.

9. Messapparatur nach Anspruch 1, **dadurch gekennzeichnet, dass** die Erkennungseinrichtung ein Mittel zum Bestätigen der erkannten Person aufweist.

10. Messapparatur nach Anspruch 1, **dadurch gekennzeichnet, dass** sie eine Aus- und Eingabevorrichtung aufweist, über die eine Bedienperson nach dem Aktivieren ihres Profils Parameterwerte einstellen und abspeichern und damit das Profil vorübergehend oder anhaltend ändern kann.

11. Messapparatur nach Anspruch 10, **dadurch gekennzeichnet, dass** das Profil aus mehreren Teilprofilen besteht, die von der Erkennungseinrichtung unter Berücksichtigung jeweiliger Eingaben sukzessive aktiviert und deaktiviert werden.

12. Verfahren zum Einstellen einer Messapparatur auf bestimmte Parameterwerte für die Durchführung spezifischer Messaufgaben oder/und die Abwicklung der Kommunikation mit einer Bedienperson, **dadurch gekennzeichnet, dass** die Messapparatur eine Bedienperson erkennt und einen dieser Person zugeordneten Satz von Parameterwerten aktiviert.

13. Verfahren nach Anspruch 12, **dadurch gekennzeichnet, dass** eine der Messapparatur zugeordnete Erkennungseinrichtung personenabhängige Signale auswertet, nach gegebenen Kriterien klassiert, mit gespeicherten Werten vergleicht, bei genügender Übereinstimmung eine Zuordnung der ausgewerteten Signale zu einer bestimmten Person vornimmt und den dieser Person zugeordneten Satz von Parameterwerten aktiviert.

14. Verfahren nach Anspruch 13, **dadurch gekennzeichnet, dass** die Aktivierung des Satzes von Parameterwerten schrittweise erfolgt, der Bedienperson Informationen ausgegeben werden und der jeweils nächste Schritt von einer Eingabe abhängig ist.

## Claims

1. Measuring apparatus, in particular laboratory instrument such as analytical balance, with means of setting values of parameters for performing specific measurement tasks, and/or for effecting communication with an operating person, and for storing sets of such parameter values as profiles, **characterized in that** the measuring apparatus is equipped with a recognition device, which is capable of recognizing an operating person and activating a stored profile assigned to that person.

2. Measuring apparatus according to Claim 1, **characterized in that** the recognition device contains means for processing and weighting personally affected signals according to prescribed criteria, and means for assigning combinations of weighted criteria to certain persons.

3. Measuring apparatus according to Claim 2, **characterized in that** the means of processing and weighting personally affected signals contains a receiver, which responds to specific transmitted signals.

4. Measuring apparatus according to Claim 3, **characterized in that** the transmitted signals originate from a transmitter borne by, and identifying, the operating person.

5. Measuring apparatus according to Claim 3, **characterized in that** the specific transmitted signals are biometric signals involuntarily emanated by the operating person.

6. Measuring apparatus according to Claim 3, **characterized in that** it furthermore contains a transmitter, and the receiver responds to specific, person-dependent changes in the transmitted signals.

7. Measuring apparatus according to Claim 6, **characterized in that** the operating person bears a transponder which identifies them.

8. Measuring apparatus according to Claim 4 or 7, **characterized in that**, irrespective of the operating person, the identifying transmitter or transponder activates an application-specific profile depending on the transmitter or transponder.

9. Measuring apparatus according to Claim 1, **characterized in that** the recognition device possesses a means of confirming the recognized person.

10. Measuring apparatus according to Claim 1, **characterized in that** it possesses an input and output device, via which an operating person, after activating their profile, can set and store parameter values, and thereby temporarily or lastingly change the profile.

11. Measuring apparatus according to Claim 10, **characterized in that** the profile consists of several sub-profiles, which are successively activated and deactivated by the recognition device taking into account respective inputs.

12. Method of setting a measuring apparatus to certain parameter values for performing specific measuring tasks, and/or effecting communication with an operating person, **characterized in that** the measuring apparatus recognizes an operating person, and activates a set of parameter values assigned to this person.

13. Method according to Claim 12, **characterized in that** a recognition device assigned to the measuring apparatus analyzes person-dependent signals, classifies them according to given criteria, compares them with stored values, on sufficient match undertakes assignment of the analyzed signals to a certain person, and activates the set of parameter values assigned to this person.

14. Method according to Claim 13, **characterized in that** activation of the set of parameter values takes place in steps, information is output to the operating person, and each next step is dependent on an input.

## Revendications

1. Appareil de mesure, en particulier appareil de mesure de laboratoire comme par exemple une balance d'analyse, avec des moyens pour régler des valeurs de paramètres pour l'exécution de tâches de mesure spécifiques et/ou pour l'exécution de la communication avec un opérateur et pour la mémorisation d'ensembles de telles valeurs de paramètres comme profil, **caractérisé en ce que** l'appareil de mesure est doté d'un dispositif de reconnaissance qui est en mesure de reconnaître un opérateur et d'activer un profil attribué à cette personne et mémorisé.

2. Appareil de mesure selon la revendication 1, **caractérisé en ce que** le dispositif de reconnaissance contient des moyens pour le traitement et la pondération de signaux influencés par les personnes selon des critères prédéfinis et des moyens pour l'attribution de combinaisons de critères pondérés à certaines personnes.

3. Appareil de mesure selon la revendication 2, **caractérisé en ce que** le moyen pour le traitement et la pondération de signaux influencés par des personnes contient un récepteur qui répond à des signaux d'émission spécifiques.

4. Appareil de mesure selon la revendication 3, **caractérisé en ce que** les signaux d'émission proviennent d'un émetteur emporté par l'opérateur et qui identifie l'operateur.

5. Appareil de mesure selon la revendication 3, **caractérisé en ce que** les signaux d'émission spécifiques sont des signaux biométriques émis involontairement par l'opérateur.

6. Appareil de mesure selon la revendication 3, **caractérisé en ce qu'**il contient également un émetteur et le récepteur réagit à des changements spécifiques, dépendantes de la personne, du signal émis.

7. Appareil de mesure selon la revendication 6, **caractérisé en ce que** l'opérateur porte un transpondeur qui l'identifie.

8. Appareil de mesure selon la revendication 4 ou 7, **caractérisé en ce que** l'émetteur ou le transpondeur identifiant active indépendamment de l'opérateur un profil spécifique à l'application et dépendant de l'émetteur ou du transpondeur.

9. Appareil de mesure selon la revendication 1, **caractérisé en ce que** le dispositif de reconnaissance présente un moyen pour la confirmation de la personne identifiée.

10. Appareil de mesure selon la revendication 1, **caractérisé en ce qu'**il présente un dispositif de sortie et d'entrée par lequel un opérateur peut régler et mémoriser des valeurs de paramètres après l'activation de son profil et peut modifier de ce fait le profil provisoirement ou de façon permanente.

11. Appareil de mesure selon la revendication 10, **caractérisé en ce que** le profil se compose de plusieurs profils partiels qui sont activés et désactivés successivement par le dispositif de reconnaissance en tenant compte d'entrées respectives.

12. Procédé pour le réglage d'un appareil de mesure sur certaines valeurs de paramètre pour l'exécution de tâches de mesure spécifiques et/ou l'exécution de la communication avec un opérateur, **caractérisé en ce que** l'appareil de mesure reconnaît un opérateur et active un ensemble de valeurs de paramètres qui est attribué à cette personne.

13. Procédé selon la revendication 12, **caractérisé en ce qu'**un dispositif de reconnaissance attribué à un appareil de mesure analyse des signaux dépendants de la personne, les classe selon des critères donnés, les compare avec des valeurs mémorisées, effectue lors d'une concordance satisfaisante une attribution des signaux analysés à une personne définie et active l'ensemble de valeurs de paramètre qui est attribué à cette personne.

14. Procédé selon la revendication 13, **caractérisé en ce que** l'activation de l'ensemble de valeurs de paramètres s'effectue progressivement, des informations sont envoyées à l'opérateur et l'étape suivante respective est dépendante d'une entrée.
